# EUROPEAN PATENT SPECIFICATION

(11) **EP 2 994 951 B1**
(45) Date of publication and mention of the grant of the patent: **30.10.2019**
(21) Application number: 14725556.6
(22) Date of filing: 06.05.2014
(51) Int. Cl.: H01M 8/22, H01M 8/0668, F03G 7/00, B01D 53/22, B01D 53/62, B01D 61/00, B01D 53/00, H01M 8/06, H01M 8/18

(54) **METHOD FOR GENERATING ENERGY FROM A GAS FLOW, AND SYSTEM AND PLANT FOR ENERGY GENERATION FROM A FLUE GAS**
VERFAHREN ZUR ENERGIEERZEUGUNG AUS EINEM GASSTROM SOWIE SYSTEM UND ANLAGE ZUR ENERGIEERZEUGUNG AUS EINEM RAUCHGAS
PROCÉDÉ DE GÉNÉRATION D'ÉNERGIE À PARTIR D'UN FLUX DE GAZ, ET SYSTÈME ET INSTALLATION DE GÉNÉRATION D'ÉNERGIE À PARTIR D'UN GAZ D'ÉVACUATION

(30) Priority: 06.05.2013 NL 1040200; 15.07.2013 NL 2011167
(43) Date of publication of application: 16.03.2016
(73) Proprietor: Stichting Wetsus Centre of Excellence for Sustainable Water Technology, 8934 CJ Leeuwarden (NL)
(72) Inventor: HAMELERS, Hubertus Victor Marie, NL-8934 CJ Leeuwarden (NL); SCHAETZLE, Olivier Camille, NL-8934 CJ Leeuwarden (NL); BIESHEUVEL, Pieter Maarten, NL-8934 CJ Leeuwarden (NL); BUISMAN, Cees Jan Nico, NL-8934 CJ Leeuwarden (NL)
(74) Representative: Verdijck, Gerardus
(86) International application number: PCT/NL2014/050289
(87) International publication number: WO 2014/182167

(56) References cited:
- EP-A1- 0 013 113
- EP-A2- 0 176 446
- WO-A2-2009/105566
- US-A1- 2008 202 341
- US-A1- 2012 067 819

## Description

The present invention relates to a method for generating energy from a gas flow, such as a flue gas, comprising CO₂.

Worldwide energy demands are rising. Although the use of renewable energy and/or sustainable energy, like wind energy and solar energy, is growing it is expected that fossil fuels will be the dominant energy source for still some period of time. Plants, such as power plants and process plants, emit still an increasing amount of CO₂. To a large extent this CO₂ emission results from the combustion of fossil fuels. To minimise the effect this CO₂ emission may have on the environment and the climate this CO₂ emission is captured and stored. One of the practical obstacles against application of this technology is the required energy input.

WO 2009/1055662 A2 and US 2008/202341 A1 disclose extraction of carbon dioxide from a fluid stream.

The object of the present invention is to provide a method for generating energy from a gas flow comprising CO₂ that obviates or at least reduces the above stated problems and contributes to an overall efficient energy production and use.

This object is achieved by the methods according to the independent claims 1 and 8 and the system according to the independent claim 9. The dependent claims describe preferred embodiments.

In a presently preferred embodiment the gas component is CO₂. By separating the gas component from the gas flow a purified gas flow is achieved. Furthermore, for the method according to claim 8, by transferring the gas component to the gas compartment the gas pressure in the gas compartment will increase. This increased gas pressure may contribute to energy generation, for example by providing gas from the gas compartment to a turbine.

In an alternative embodiment according to claim 1 of the present invention electrodes are being used for generating energy from a gas flow, more specifically generating energy from a CO₂ flow. Such method comprises the steps of:
- providing a gas flow to a flow channel;
- production of cations and anions;
- diffusing of the cations towards a cation-selective electrode and of the anions towards an anion-selective electrode;
- adsorbing the cations and anions by the electrodes; and
- transporting of electrons through an electrical circuit to maintain electro-neutrality of the electrodes and generate electrical energy.

Providing at least two electrodes with one being anion-selective and the other being cation-selective that are capable of sorbing, preferably absorbing (including adsorbing), anions and cations respectively, energy can be generated through this sorption process. Such sorption process starts with the at least two electrodes not yet saturated with ions.

As an example, in a presently preferred embodiment of the invention the gas in the flow channel, including any
type of flow compartment, is a flue-gas with a CO₂-level of say 15%. First, the gaseous CO₂ absorbs in the water, according to reaction *R*1:

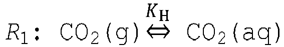

Next, the absorbed CO₂ reacts with water to produce carbonic acid (*R*2), which can dissociate into a proton and a bicarbonate ion (*R*3). The bicarbonate ion can further dissociate into a carbonate ion and a second proton (*R*4) according to reactions R₂, R₃ and R₄:

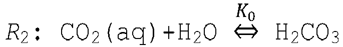

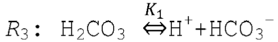

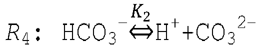

When the electrodes are not yet saturated with ions, the protons and bicarbonate ions will spontaneously diffuse towards the electrodes. Carbonate may have little effect as this species is expected to have a very low concentration. The presence of the ion exchange membranes (one allowing transport of cations, one allowing that of anions) leads to the protons and bicarbonate ions being absorbed in different electrodes: the proton will be adsorbed in the cation-selective electrode and the bicarbonate ion in the anion-selective electrode. To maintain electro-neutrality, electrons will be transported through the (external) electrical circuit, from the anion-adsorbing side towards the cation-adsorbing electrode. This selective adsorption process thus induces an electric current. This process will continue until the electrodes are saturated.

Anion-selective and cation-selective electrodes can be achieved in different ways. For example, the (carbon) electrodes can be chemically modified by filling the interparticle pores between carbon particles by polyelectrolyte gel and/or by placing an ion-selective layer in front of the electrode such as a membrane. Such ionexchange membrane is a thin water-filled porous structure containing a high internal concentration of fixed charge groups (e.g. 5 M per volume of water in membrane) of either positive or negative sign. In the case these groups are positive (e.g., from quaternary amine-groups present in the membrane), the membrane has a high selectivity to allow anions (ions of negative sign) passage, while blocking access to cations (such as protons). This is called an anion-exchange membrane. The reverse situation is achieved with sulfonate groups, and this is called a cation-exchange membrane. Other options to provide selective electrodes includes the use of chemically selective inorganic materials.

Each electrode consists of a current collector that connects the system to the outer electrical circuit.

The current collector is in direct contact with a conductive material with a high capacitance, which preferably is a porous carbon electrode. At the high internal surface area within the porous carbons, ions can be stored next to the electrical charge: a so-called electrical double layer (EDL) is formed. The EDL achieves that at the carbon/water interface electronic charge can only be in the carbon, and ions (ionic charge) can only be in the water. The two charges will be very close, only separated by a few nanometers. In magnitude the two charges cancel one another: thus, overall, the EDL is charge-neutral. When the electrical charge is of negative sign, the electrode will therefore attract and adsorb cations in the water-filled micro-pores in the carbon (next to the carbon surface). This electrode is called the cathode. In the opposite electrode all processes are reversed in sign, this is the anode.

In a presently preferred embodiment the electrode, preferably a porous carbon electrode, is sealed or separated from the flow channel with either a cation exchange membrane or an anion exchange membrane. The space between the membranes, i.e. the flow compartment, is in a presently preferred embodiment filled with water, through which the flue gas is flowing in the form of bubbles. The water provides for an ionic connection between the two different electrodes.

In alternative embodiments the electrodes are separated by ion-selective membranes without capacitive electrodes. As mentioned earlier, ion-selective electrodes can be applied thereby obviating the need for membranes.

According to the aforementioned operation, at the start there will be a high electrical potential and current, and both will slowly decrease while the electrodes get saturated. After removing the cations and anions from the electrodes in a regeneration step the electrodes can be used again for generation energy from the gas flow.

One of the advantages of generating energy from a gas flow with a relatively high level of CO₂ is that such gas flows are commonly available, for example as a flue gas. This renders the energy generation according to the aforementioned method very cost effective. Although the aforementioned method protons and bicarbonate are mentioned as cations and anions it will be understood that it could be possible to use other cations and anions in combination therewith and/or as an alternative thereto. A specific example of flue gas is the waste flue gas produced by a power plant that is known for huge production of CO₂.

In an advantageous embodiment according to the present invention the method further comprises the step of desorbing the protons and ions from the electrodes by providing an acceptor gas to the flow channel.

By replacing the donor gas, preferably providing CO₂, by an acceptor gas the electrodes are regenerated as the cations, such as the protons, and the anions desorb to the acceptor gas. This provides an effective cycle of absorbing and desorbing that occur alternately in time.

Such a cycle of absorption and desorption with regeneration of the electrodes will be referred to as reversible capacitive absorption of CO₂. This reversible capacitive absorption is a versatile process making use of the mixing energy that is present in the flue gas.

In an advantageous embodiment according to the present invention the acceptor gas has a relatively low CO₂ concentration such that CO₂ is desorbed spontaneously.

When the donor gas is replaced by acceptor gas with a relatively low CO₂ concentration in the desorption step this will lead to a spontaneous desorption of CO₂. This desorption will start from the aqueous phase and consequently by diffusing also from the electrodes. To maintain electro-neutrality of the electrodes an electric current will start flowing in an opposite direction relative to the current that is produced during the CO₂ absorption step. This means that during this desorption step with regeneration of the electrodes also energy can be generated. When the regeneration of the electrodes has been completed, the electrodes can be exposed to the donor gas again and the cycle will start again.

In a presently preferred embodiment the acceptor gas is outside air that has a relatively low CO₂ concentration.

To maintain a relatively low CO₂ concentration of the acceptor gas this gas should be replenished regularly or even continuously.

In a further advantageous embodiment according to the present invention when desorbing cations and anions from the electrodes, the electrodes are provided with electrical energy to force CO₂ desorption to the acceptor gas to produce a gas with a high CO₂ concentration.

By providing and/or producing an acceptor gas with a relatively high CO₂ a CO₂ flow will be generated. In combination with the adsorption step this effectively separates CO₂ from the original incoming gas, for example a flue gas. For the desorption an electric potential has to be provided because the CO₂ content of the acceptor gas may have a higher CO₂ content as compared to the donor gas already at the start of the desorption step and certainly at the end of this desorption step when the electrodes have been regenerated.

Therefore, this separation method provides an alternative to existing gas stripping operations. This may enable a reduction of CO₂ emissions. As in the first adsorption step energy can be generated the overall energy usage can be kept to a minimum when stripping CO₂ as compared to conventional techniques involving carbon capture and storage requiring organic solvent, a scrubber and a stripper using steam thereby requiring an amount of heat such that the overall efficiency of this process is rather limited.

In a further advantageous embodiment according to the present invention energy that is generated when desorbing ions to the acceptor gas is provided to a second set of electrodes and a second flow channel to force CO₂ desorption to a second acceptor gas for CO₂ separation.

By operating at least two processes in parallel and/or in series, the energy that is generated in the spontaneous desorption step can be provided to the forced desorption step. This means that part of the CO₂ desorption is used for energy generation thereby enabling a CO₂ gas to be produced in the forced desorption process. The forced desorption of the CO₂ can be performed even without addition of external energy thereby enabling a CO₂ separation process that can be operated energy-neutral. It can be calculated that 70% of the CO₂ that is present in a combustion gas or flue gas can be concentrated into a pure CO₂ flow in such energy efficient combined process. As described above, this is achieved by using a part of the CO₂ in the flue gas for to generate electrical energy with this electrical energy being used to separate and concentrate another part of the CO₂.

As a further advantage it can be calculated that although different temperatures have a substantial effect on the amount of electricity that can be generated, the temperature effect on the working point of energy neutral separation is rather limited. This further contributes the practical implementation possibilities for such a combined spontaneous and forced desorption process resulting in an energy effective CO₂ separation.

Optionally, the method according to the invention may comprise the additional step of transferring the electrodes to another flow, for example from the acceptor gas to the donor gas or vice versa. This means that the electrodes are being switched in stead of the flows. The electrodes can be transferred using a transfer mechanism. The electrodes can be shaped as plates, wires and/or flowable/floating electrodes. Further details of the transfer mechanism and the different embodiments of the transferrable electrodes will be discussed in relation to the system.

In a preferred embodiment of the invention, the method for generating energy from a gas flow comprising CO₂ comprises:
- providing a first compartment, a second compartment and a third compartment, wherein the first compartment is separated from the second compartment by a cation exchange membrane and the second compartment is separated from the third compartment by an anion exchange membrane;
- providing water in the compartments;
- providing the gas flow to the second compartment for dissolving the CO₂ in the water in the second compartment;
- production of cations and anions;
- diffusing of the cations towards the first compartment and of the anions towards the third compartment, thereby creating a potential difference; and
- generate electrical energy.

This method employs a process known as reversed electrodialysis (RED). Conventional methods of reversed electrodialysis make use of the difference in sodium chloride (NaCl) concentration between two water streams. In contrast, the method according to the invention utilizes the concentration difference in dissolved CO₂ to generate electrical energy. The bicarbonate and carbonate ions will diffuse through the anion exchange membrane to the third compartment, while the protons (H⁺ ions) diffuse through the cation exchange membrane to the first compartment. This creates a flow of charged particles and hence a current.

Preferably, a stack of alternating anion membranes and cation membranes is used to increase the potential difference created due to the diffusion of the anions and cations.

An electrolyte, namely, water is provided to convert the flow of ions in a flow of electrons by means of a redox reaction. The electrolyte may be provided in outer compartments in a reversed electrodialysis stack.

Preferably, the method comprises using a CO₂ adsorbing material, such as active carbon. For example, the first, second and/or third compartment are provided with a CO₂ adsorbing material.

In a preferred embodiment according to claim 8 of the invention, the method for generating energy from a gas flow comprising CO₂ comprises the step of:
- providing a first compartment and a second compartment, separated by a membrane;
- providing water in the compartments;
- providing the gas flow to the first compartment for dissolving the CO₂ in the water,
such that an osmotic pressure between the two compartments forces water from the second compartment to the first compartment, thereby increasing the water level in the first compartment, the method further comprising:
- generating electrical energy by connecting the first compartment to a device for generating electrical energy from the pressure of the water in the first compartment.

This method employs a process known as pressure retarded osmosis (PRO). Conventional methods of pressure retarded osmosis make use of the difference in sodium chloride (NaCl) concentration between two water streams. PRO utilizes a membrane which allows passage of water but blocks the ions in the water. Due to the osmotic pressure, fresh water from a first compartment diffuses through the membrane to salt water in a second compartment, thereby increasing the water level in the second compartment. Electrical energy can be generated using this increased water level, by employing conventional water pressure turbines.

In contrast, the invention makes use of the difference in dissolved CO₂. The concentration of ions due to dissolved CO₂ (protons, bicarbonate and carbonate) is higher in the first compartment than in the second compartment. Therefore, an osmotic pressure establishes over the membrane. Water will diffuse through the membrane from the second compartment, with a low concentration of ions, to the first compartment, with a higher concentration of ions, thereby restoring equilibrium. The water level in the first compartment will thus increase. The increased water level gives rise to an increased water pressure, which can be utilized to drive a turbine, as in conventional hydropower installations.

Preferably, the method comprises using a CO₂ adsorbing material, such as active carbon. For example, the first and/or second compartment are provided with a CO₂ adsorbing material.

The invention further relates to a system according to claim 9 for generating energy and/or separating a gas component from a gas flow.

Such system provides the same effects and advantages as mentioned in respect of the method. These advantages include an effective energy generation of electrical energy using the afore mentioned method. In addition, a gas component, such as CO₂, can be separated from a flue gas in an energy efficient manner.

The invention further relates to a system for energy generation from a flue gas and a plant comprising such system, with the system comprising:
- a gas inlet;
- at least two capacitive electrodes comprising a current collector and a conductive material with a capacitance;
- a flow channel operatively connected to the gas inlet between the at least two electrodes;
- wherein the at least one electrode is separated from the flow channel with an anion exchange membrane and at least one electrode is separated from the flow channel with a cation exchange membrane.

Such system and plant provide the same effects and advantages as mentioned in respect of the method. These advantages include an effective energy generation of electrical energy using the afore mentioned method. In addition, CO₂ can be separated from a flue gas in an energy efficient manner. In fact, the system according to the present invention enables a reversible capacitive adsorption of CO₂. This enables an efficient energy generation and/or CO₂ separation.

In an advantageous embodiment according to the present invention the system further comprises a fixed electrolyte structure to minimise gas flow resistance.

In a presently preferred embodiment of the invention the CO₂ comprising donor gas reacts with water to form carbonic acid that in turn dissociates to produce the ions required for adsorption. This would imply that an electrolyte layer is provided between the at least two electrodes. In a presently preferred embodiment water is used in the flow channel. To minimise the gas flow resistance a fixed electrolyte structure is provided. This minimises the resistance to gas flow thereby contributing to an effective energy generation and/or CO₂ separation.

In a presently preferred embodiment the fixed electrolyte structure can be solid polymer electrolyte, for example a wire mesh.

In a presently preferred embodiment the electrodes comprise a flat plate. This enables providing a relatively large surface for adsorbing the ions. Alternative for such flat plate configuration, or in addition thereto, the electrodes may comprise wire based electrodes. Such wire shaped electrodes enhance mass transfer as compared to a flat plate as the hydrodynamic resistances may be kept to a minimum. A further advantage of such wire shaped electrodes is the relatively easy fabrication process that may make use of extrusion technology that is capable of producing the absorber structure substantially in one step. This may further improve the efficiency of the system according to the present invention.

In an alternative embodiment of the invention the electrodes comprise floating/flowable electrodes. This may be achieved by providing the electrodes as a suspension. This renders transfer of the electrodes to the other flow, i.e. donor flow or acceptor flow, more easy.

According to the present invention the system further comprises a transfer mechanism to transfer the electrodes to another flow channel.

As an alternative to replacing the donor gas with the acceptor gas and vice versa, or in combination therewith, a transporting mechanism may transfer the electrodes from a first gas phase to another gas phase. For example, the electrodes are used in a absorption step. After saturation of the electrodes the electrodes are transferred to another flow channel thereby enabling the desorption step and regeneration of the electrodes. This transfer mechanism may switch the positions of the electrodes physically by lifting the electrode from a first system reactor and transfer them to a second system reactor, for example. Other embodiments of this transfer mechanism can be envisaged. For example, the separated electrode particles can be transported as a suspension by a flowing carrier liquid.

Optionally, the system according to the invention comprises one or more buffers. These buffers may comprise ammonia (NH₃) and/or an amine, such as monoethanolamine (C₂H₇NO), for example. Preferably, the buffer is provided in the flow channel, for example by addition of a buffer solution to water in the flow channel.

The use of a buffer, or a buffer solution, increased the conductivity and the pH difference. This reduces the internal resistance. The increase in pH difference between the air and the CO2 saturated solution provides a higher power density. This renders the system according to the invention more effective.

In a further preferred embodiment, the system comprises a reversed electrodialysis stack. Such a stack comprises alternating anion and cation exchange membranes, which define chambers which alternating hold water comprising a high concentration of dissolved CO₂ and water comprising a low concentration of dissolved CO₂.

In a preferred embodiment, the system for energy generation from a flue gas comprises:
- a first compartment and a second compartment for holding water, separated by a membrane for allowing passage of water but blocking ions;
- a gas inlet connected to the first compartment for dissolving the flue gas in water in the first compartment; and
- a device for generating electrical energy from water pressure connected to the first compartment for generating electrical energy from pressure of the water in the first compartment.

The features described for the method can also be applied to the system and vice versa.

Further advantages, features and details of the invention are elucidated on the basis of preferred embodiments thereof, wherein reference is made to the accompanying drawings in which:
- Figure 1 illustrates a system for performing the method according to the present invention;
- Figure 2 illustrates a schematic overview of the method according to the present invention;
- Figure 3 illustrates some experimental results with the system of figure 1;
- Figure 4 illustrates an alternative embodiment of the system of figure 1;
- Figure 5 illustrates a further embodiment of a system according to the present invention;
- Figure 6 illustrates experimental results with the embodiment of figure 5;
- Figure 7 illustrates a system for performing a second embodiment of the method according to the invention;
- Figure 8 illustrates a system for performing a third embodiment of the method according to the invention;
- Figure 9 illustrates a system according to the invention for generating energy and/or separating a gas component from a gas flow without electrodes.

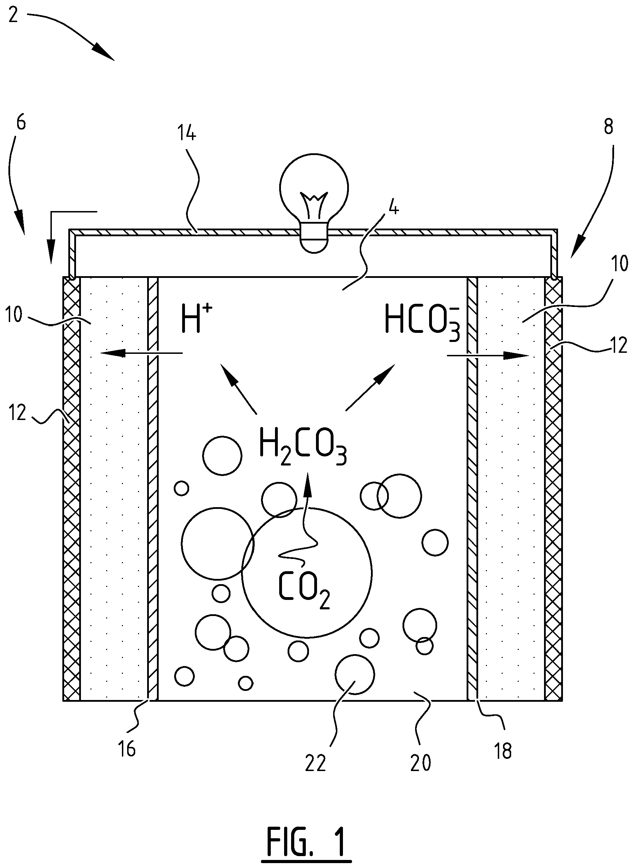

System 2 (figure 1) comprises flow channel 4,
first electrode 6 and a second electrode 8. Electrodes 6, 8 comprise a conductive material 10 with a high capacitance. In the illustrated embodiment conductive material 10 comprises porous carbon. Current collectors 12 of electrodes 6, 8 are in contact with conductive material 10. At the relatively large internal surface area within the porous carbon 10 ions can be stored or adsorbed. Current collectors 12 are connected by electrical circuit 14. In the illustrated embodiment the ions are stored next to the electrical charge, thereby forming a so-called electrical double layer as mentioned earlier wherein at the carbon/water interface the electronic charge can only be in the carbon and ions (ionic charge) can only be in the water. With an electrical charge of a negative sign the electrode will attract and adsorb cations in the water-filled micropores in the carbon. This electrode behaves as a cathode. In the opposite electrode the processes are reversed and this electrode behaves as an anode. Electrode 6 is separated or sealed from flow channel 4 with cation exchange membrane 16. Electrode 8 is separated and/or sealed from flow channel 4 with anion exchange membrane 18. In the illustrated embodiment flow channel 4 is filled with a liquid 20, in the illustrated embodiment water. Gas, such as flue gas, flows through liquid 20 in the form of bubbles 22. Liquid 20 provides an ionic connection between the at least two electrodes 6, 8.

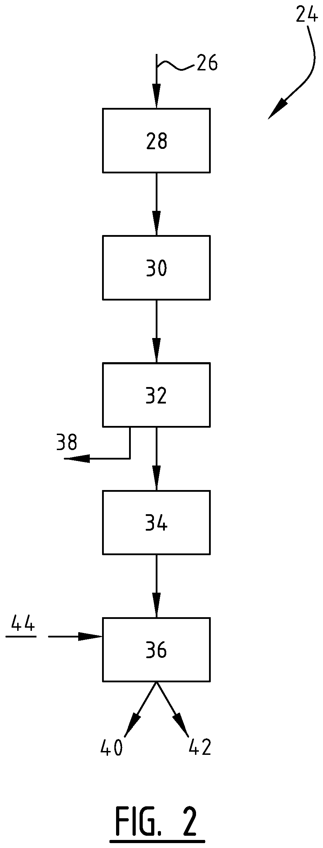

The method 24 according to the present invention (figure 2) starts with providing gas at inlet 26. In flow channel 4 the reactions R1-R4 described earlier take place in reaction step 28. The cations and anions diffuse towards the electrodes 6, 8 passing the selective membranes 16, 18 in diffusion step 30. The ions are adsorbed and electric energy is generated in electrical circuit 14 in adsorption step 32.

When electrodes 6, 8 are saturated, system 2 is switched from the adsorption state to the desorption state in switching step 34. Next, desorption will take place in desorption step 36. From the adsorption step 32 energy 38 is generated. From desorption step 36 an amount of energy 40 is generated and/or an amount of separated CO₂ in flow 42 is being generated with optionally an amount of energy 44 being provided to enable CO₂ separation. The amount of energy 44 can be provided by the generated energy 38, 40 in adsorption step 32 and/or desorption step 36. Alternatively, energy 44 is provided by an external source.

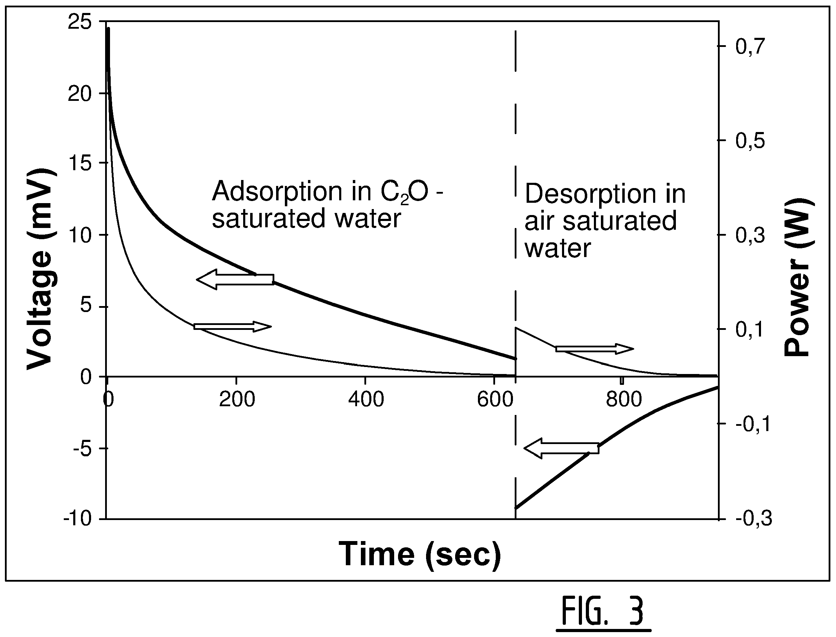

In a first experiment the system 2 is used in an experiment providing CO₂-saturated water in flow channel 4. In the experiment an electrical potential will develop using a constant external resistance such that the potential is proportional with the generated current. The experiment results are shown in figure 3 for rise and decrease of electrical voltage (left axis) and power produced (right axis) during adsorption of CO₂ in a capacitive electrode cell based on system 2 of figure 1.

In a further experiment it is shown that with an increasing replenishment of the acceptor gas relative to the flue gas the amount of available extractable energy increases. This amount of energy strongly depends on the gas temperature. For example, at a temperature of 150°C the flue gas undergoes only limit treatment, while 50°C is a characteristic temperature for system with wet scrubbing and 20°C is a representative ambient temperature. It is estimated that when system 2 is applied to an average power plant the amount of energy that can be harvested is equivalent of up to 10% of the electricity produced in such average power plant.

In a further experiment, in the desorption step 36 a combination is made of spontaneous desorption resulting in a net production of energy 40 and a forced desorption resulting in a production of CO₂ flow 42. Although the temperature has a certain effect on the electricity that can be generated, the equilibrium between energy consumption for the forced desorption process as compared to the energy generation of the spontaneous energy production in the desorption step surprisingly remains about the same such that at this equilibrium about 70% of the CO₂ can be separated in a reversible capacitive adsorption process according to the present invention. Therefore the reversible capacitive absorption of CO₂ provides a versatile process that be used for energy generation and CO₂ separation that can be applied to power plants and also to refineries, gas and oil exploration, steel production, green houses, etc.

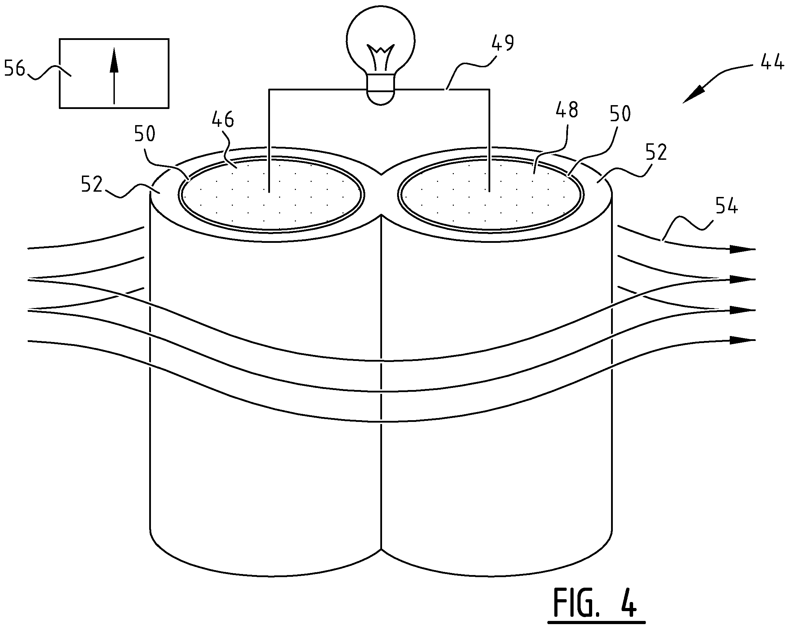

As an alternative to system 2 making use of a bubbling flat plate reactor type, an alternative system 44 (figure 4) can be provided. System 44 comprises a cathode 46 and an anode 48 that are connected through electrical circuits 49. The wire based electrodes 46, 48 further comprise the membranes 50 and a solid polymer electrolyte 52 around which flow 54 comprising CO₂ can be provided. In a further alternative configuration (not shown) the electrode can be in the form of a flowing suspension that is pumped slowly around in a closed circuit thereby transporting the electrodes to a second channel 4. In the illustrated embodiment, transfer mechanism 56 that is schematically illustrated transfers electrodes 46, 48 from a first flow chamber 4 to a second flow chamber 4.

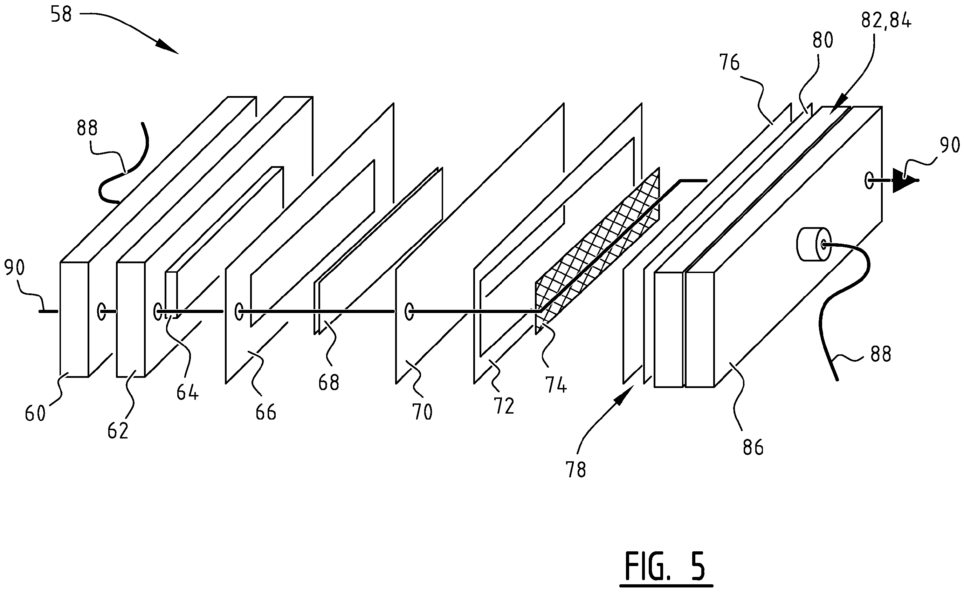

In an experiment, cell 58 (figure 5) comprises aluminum end plate 60, hollowed poly-methyl methacrylate plastic plate 62 provided with graphite electrode 64, silicon gasket 66 with graphite foil current collector with an activated carbon coating 68, anion exchange membrane 70 from Fumatech, Teflon gasket 72, polymer spacer 74, cation exchange membrane 76 from Fumatech, graphite foil current collector with an activated carbon coating 78, silicon gasket 80, hollowed poly-methyl methacrylate plastic plate 84 provided with graphite electrode 82, aluminum end plate 86. Cell 58 is connected to circuit 88. Flow 90 enters cell 58 at plate 60, passes through the space provided with spacer 74 and leaves cell 58 at plate 86.

Anion exchange membrane 70 was pre-conditioned in a 0.25M KHCO₃ solution and refreshed two times (once after 2.5 days and one after one extra days). Cation exchange membrane 76 was pre-conditioned in a 0.25M HCl solution and refreshed once after 2.5 days. Both electrodes 64, 82 are Norit super 30 based (casted at 500 microns) with 10% pvdf and were soaked in an initially CO₂ saturated demi-water solution (sparkling demi-water that progressively degassed), wherein electrodes 64, 82 stayed in this solution for 3.5 days. The CO₂ saturated solution was obtained after bubbling CO₂ in demi-water. CO₂ was bubbling at least 1h30 before starting the measurements. The air saturated solution was obtained by bubbling compressed air from the standard building line.

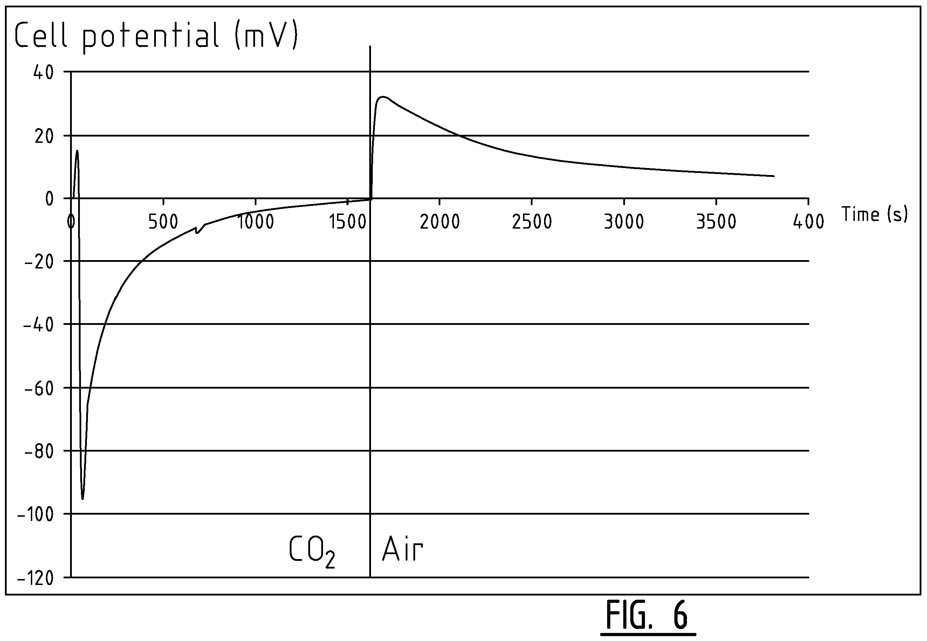

Internal resistance was measured between two electrodes 64, 82 and was 83Ω in the air saturated solution and 13.5 Ω in the CO₂ saturated solution. The pH was measured to be 5.53 in the air saturated solution and 3.96 in the CO₂ saturated solution. The cell potential (figure 6) is measured in mV. In CO₂ the potential returns to zero due to the saturation effect and flow 90 through cell 58 is switched to air. The potential switches sign and slightly reduces in time. These results illustrate the operation of cell 58 in an embodiment according to the invention.

Further experiments with this experimental setup were performed. Switching the flow of CO₂-rich and CO₂-poor gas about every 400 seconds shows a measured open cell Voltage of about -15 mV to about +40 mV at a temperature of about 20°C and a partial pressure of 1 bar.

Additional experiments were provided wherein electrodes 6, 8 were provided in a buffer solution. The buffer solution that was used in the experiments was ethanolamine. Results are presented in Table 1 for several pH differences.

**Table 1: Power density (mW/m²) versus pH difference**

| pH difference | Total energy (mJ) | Power density (mW/m²) |
|---|---|---|
| 0,74 | 0,0246107 | 0,0040679 |
| 0,79 | 0,0421384 | 0,0069881 |
| 0,85 | 0,0672965 | 0,0111974 |
| 0,91 | 0,1078457 | 0,0178552 |
| 0,98 | 0,1702072 | 0,0282736 |
| 1,05 | 0,2461349 | 0,0409542 |
| 1,09 | 0,3553666 | 0,0591292 |
| 1,15 | 0,4911211 | 0,0818535 |

Results show a higher power density with a larger pH difference thereby showing the effect of providing a buffer.

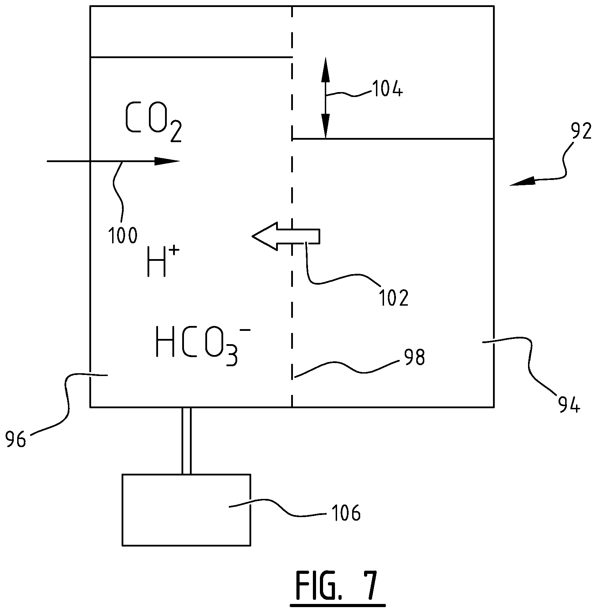

System 92 (figure 7) comprises a first compartment 94 and a second compartment 96, separated by a membrane 98 of the type that allows passage of water, but is impermeable to ions. Both compartments 94, 96 are provided with water. Second compartment 96 comprises a gas inlet 100 for feeding a CO₂ comprising gas in compartment 96. The CO₂ dissolves in the water, leading to an increased concentration of protons, carbonate and bicarbonate ions in the water in compartment 96. In contrast, the water in compartment 94 has a relatively low ion concentration. This creates an osmotic pressure between the compartments 94, 96. This forces water through membrane 98 according to arrow 102. The water level of the water in compartment 96 rises as a consequence, as indicated by arrow 104. This increase water level gives rise to an increased water pressure, which is utilized in a hydropower turbine 106.

The compartments 94, 96 can be connected to inlets and/or outlets for continuous and/or batch-wise operation.

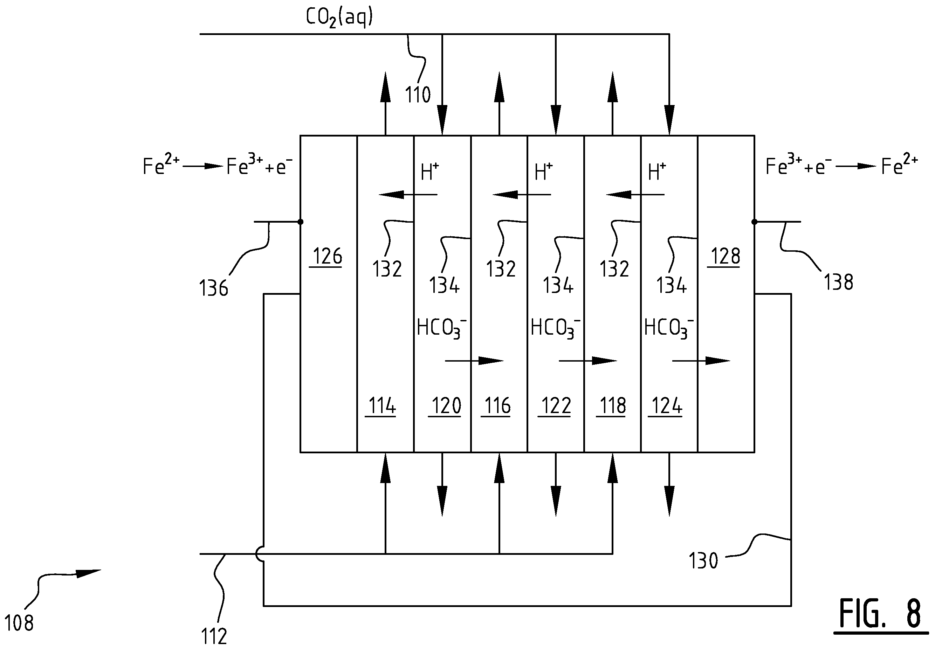

System 108 (figure 8) comprises a first inlet 110 for CO₂ comprising water. Alternatively, separate inlets are provided for CO₂ and water, and a mixing chamber is provided to dissolve the CO₂ in the water.

System 108 further comprises a water inlet 112, connected to compartments 114, 116, 118. The CO₂ comprising water from inlet 110 is fed to adjacent compartments 120, 122, 124.

The outside compartments 126, 128 comprise an electrolyte. These compartments are connected to each other by line 130.

The compartments 114, 116, 118 are separated from compartments 120, 122, 124 by means of cation exchange membranes 132 and anion exchange membranes 134.

Electrolyte compartments 126, 128 are provided with electrodes 136, 138.

Compartments 114, 116, 118, 120, 122, 124 are provided with outlets. System 108 can be operated in continuous or in batchwise operation.

The protons (H⁺) diffuse through the kation exchange membranes 132 from the CO₂ rich water to the CO₂ poor water, while the carbonate and bicarbonate ions diffuse through the anion exchange membranes. The resulting flow of ions is converted to a flow of electrons by means of the electrolyte in outer compartments 126, 128 and/or the electrodes 136, 138. For example, the electrolyte comprises iron ions (Fe²⁺ as reductor and/or Fe³⁺ as oxidator). The reduction and oxidation reaction is as following:

Fe³⁺ + e- → Fe²⁺

Fe²⁺ → Fe³⁺ + e⁻.

When the electrodes 136, 138 are connected to an electrical circuit, a current results.

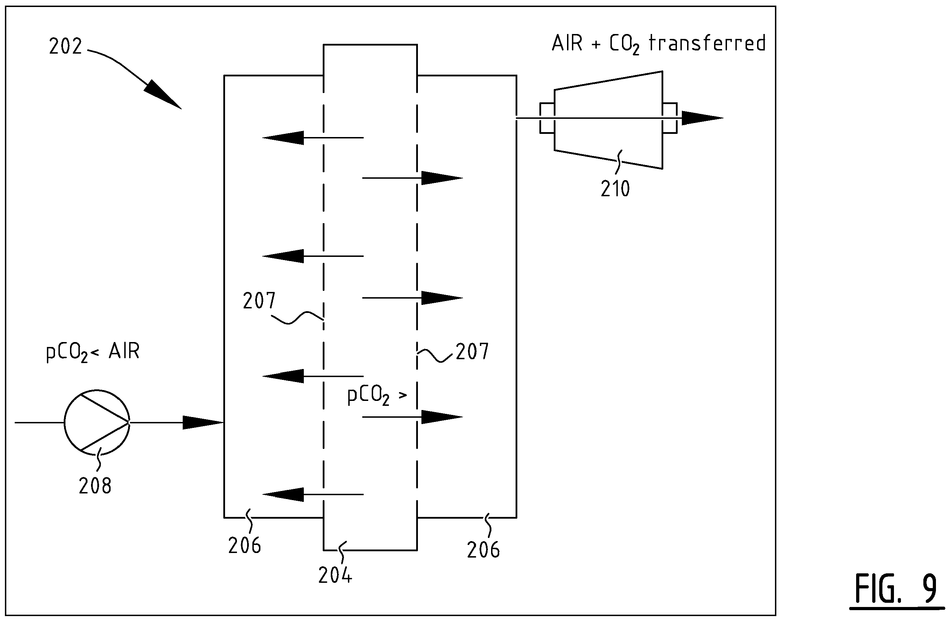

System 202 (figure 9) comprises a gas flow channel 204 and a gas compartment 206 that are separated by a membrane 207. In the illustrated embodiment the membrane is CO2 selective. Such membrane is known (e.g. see "Future Directions of Membrane Gas Separation Technology", Richard W. Baker, Industrial & Engineering Chemistry Research 2002 41 (6), 1393-1411)). The gas flow through channel 204 has a high CO₂ concentration, at least significantly higher as compared to the concentration in compartment 206. For example, in flue gases the CO₂ concentration is about 10% and the partial pressure in such case would be about 0,1 bar. In the illustrated embodiment the gas pressure in channel 204 is about 1 bar. Pump 208 provides a gas, such as outside air with CO₂ content of about 390 ppm with a pressure of about 50 bar, for example. This results in a partial pressure for the CO₂ in compartment 206 of about 1950 Pa and CO₂ will transfer from channel 204 to compartment 206. This increases the pressure in compartment 206. The outflow of compartment 206 is fed to turbine 210 to generate energy.

It will be understood that specific features of the different embodiments that are illustrated and/or described can be combined. For example, the transfer mechanism 56 illustrated for the wire-based type system 44 can also be applied to the flat plate reactor system 2.

The present invention is by no means limited to the above described preferred embodiments thereof. The rights sought are defined by the following claims, within the scope of which many modifications can be envisaged. It is thus possible according to the invention to make a combination of the described embodiments, features and measures.

## Claims

1. Method for generating energy from a gas flow comprising a gas component, such as CO₂, the method comprising the steps of:
- providing the gas flow to a flow channel (4) containing water;
- production (28) of cations and anions from the gas component absorbed in water and that reacts with water;
- providing a cation-selective electrode (6) and an anion-selective electrode (8) capable of sorbing cations and anions respectively, wherein, to provide the cation and anion selectivity, at least one electrode of the at least two electrodes is separated from the flow channel with an anion exchange membrane (18) and at least one other electrode of the at least two electrodes is separated from the flow channel with a cation exchange membrane (16) and/or the electrodes are chemically modified by filling interparticle pores with polyelectrolyte gel;
- diffusing of the cations towards the cation-selective electrode and of the anions towards the anion-selective electrode;
- sorbing (32) the cations and anions by the electrodes (6,8);
- transporting of electrons through an electrical circuit (14) to maintain electro-neutrality of the electrodes; and
- generating electrical energy.

2. Method according to claim 1, wherein the gas component is CO₂.

3. Method according to any one of the preceding claims, further comprising separating the gas component, such as CO₂, from a gas flow, wherein separating the gas component from the gas flow comprises the step of desorbing the cations and anions from the electrodes by providing an acceptor gas to the flow channel.

4. Method according to claim 3, wherein the gas flow to the flow channel having a relatively high concentration of the gas component compared to the acceptor gas.

5. Method according to claim 3 or 4, wherein the acceptor gas is outside air.

6. Method according to claim 3, wherein the electrodes are provided with electrical energy to force CO₂ desorption to the acceptor gas to produce a gas with a high CO₂ level during the desorption.

7. Method according to claim 3, wherein energy that is generated when desorbing ions to the acceptor gas is provided to a second set of electrodes and a second flow channel to force CO₂ desorption to the second acceptor gas for CO₂ separation.

8. Method for generating energy from a gas flow comprising a gas component, such as CO₂, and separating the gas component, such as CO₂, from a gas flow, the method comprising the steps of:
- providing the gas flow to a flow channel (4);
- providing a gas to a compartment that is separated from the flow channel with a membrane selective for the gas component; and
- transfer of the gas component through the membrane from the flow channel to the gas compartment, wherein the step of transferring the gas component comprises increasing the pressure in the gas compartment, and wherein the gas pressure of the gas compartment is used for energy generation,
wherein the gas flow has a relatively high partial pressure of the gas component compared to the gas in the compartment.

9. System (2) for generating energy and/or separating a gas component from a gas flow, comprising:
- a gas inlet (24);
- a flow chamber or flow channel (4) for the gas flow with the gas component configured for production of cations and anions from the gas component that absorbs in water and that reacts with water;
- a cation-selective electrode (6) and an anion-selective electrode (8) configured for sorbing cations and anions that are separated from the flow channel with an ion exchange membrane (16,18);
- an electrical circuit (14) connecting the electrodes to maintain electro-neutrality of the electrodes; and
wherein the system is configured for generating electrical energy and/or separating the gas component from the gas flow, wherein at least one electrode of the at least two electrodes is separated from the flow channel with an anion exchange membrane and at least one other electrode of the at least two electrodes is separated from the flow channel with a cation exchange membrane.

10. System according to claim 9, wherein:
- the electrodes comprise at least two capacitive electrodes comprising a current collector and a conductive material with a capacitance; and
- the flow channel is operatively connected to the gas inlet between the at least two electrodes.

11. System according to claim 10, further comprising a fixed electrolyte structure to minimize gas flow resistance, wherein the electrodes preferably comprise a flat plate and/or wherein the electrodes comprise wire based electrodes and/or the electrodes comprise flowable or floatable electrodes.

12. System according to one or more of the claims 10 or 11, further comprising a transfer mechanism to transfer electrodes to another flow channel, and/or further comprising a buffer, and/or wherein the system comprises a reversed electrodialysis stack.

13. Plant comprising a system according to one or more of the claims 9-12 for generating energy with the gas flow and/or separating of CO₂ from the gas flow, wherein the gas flow is flue gas.

## Patentansprüche

1. Verfahren zum Erzeugen von Energie aus einem Gasstrom, welcher eine Gaskomponente umfasst, wie beispielsweise CO₂, wobei das Verfahren die folgenden Schritte umfasst:
- Bereitstellen des Gasstroms an einen Strömungskanal (4), welcher Wasser enthält;
- Erzeugen (28) von Kationen und Anionen aus der Gaskomponente, welche im Wasser absorbiert wird, und die mit Wasser reagiert;
- Bereitstellen einer kationenselektiven Elektrode (6) und einer anionenselektiven Elektrode (8), welche in der Lage ist, Kationen bzw. Anionen zu sorbieren, wobei, um das Kation und das Anion selektiv bereitzustellen, zumindest eine Elektrode von den zumindest zwei Elektroden von dem Strömungskanal durch eine Anionenaustauschmembran (18) getrennt ist und zumindest eine andere Elektrode von den zumindest zwei Elektroden von dem Strömungskanal durch eine Kationenaustauschmembran (16) getrennt ist, und / oder die Elektroden chemisch modifiziert werden durch Füllen interpartikulärer Poren mit einem Polyelektrolyt-Gel;
- Diffundieren der Kationen zu der kationenselektiven Elektrode und der Anionen zu der anionenselektiven Elektrode;
- Sorbieren (32) der Kationen und Anionen durch die Elektroden (6, 8);
- Transportieren der Elektronen durch eine elektrische Schaltung (14), um eine Elektro-Neutralität der Elektroden aufrecht zu erhalten; und
- Erzeugen elektrischer Energie.

2. Verfahren gemäß Anspruch 1, wobei die Gaskomponente CO₂ ist.

3. Verfahren gemäß irgendeinem der vorhergehenden Ansprüche, weiterhin ein Trennen der Gaskomponente, wie beispielsweise CO₂, von dem Gasstrom umfassend, wobei das Trennen der Gaskomponente von dem Gasstrom den Schritt des Desorbierens der Kationen und Anionen von den Elektroden durch Bereitstellen eines Akzeptorgases an den Strömungskanal umfasst.

4. Verfahren gemäß Anspruch 3, wobei der Gasstrom zu dem Strömungskanal eine relativ hohe Konzentration von der Gaskomponente verglichen mit dem Akzeptorgas aufweist.

5. Verfahren gemäß Anspruch 3 oder 4, wobei das Akzeptorgas Außenluft ist.

6. Verfahren gemäß Anspruch 3, wobei die Elektroden mit elektrischer Energie versorgt werden, um eine CO₂ Desorption zu dem Akzeptorgas zu erzwingen, um ein Gas mit einem hohen CO₂ Level während der Desorption zu erzeugen.

7. Verfahren gemäß Anspruch 3, wobei Energie, die erzeugt wird, wenn Ionen zu dem Akzeptorgas desorbiert werden, dem zweiten Satz von Elektroden und dem zweiten Strömungskanal bereitgestellt werden, um eine CO₂ Desorption zu dem zweiten Akzeptorgas für die CO₂ Trennung zu erzwingen.

8. Verfahren zum Erzeugen von Energie aus einem Gasstrom, welcher eine Gaskomponente, wie beispielsweise CO₂, umfasst und zum Trennen der Gaskomponente, wie beispielsweise CO₂, von dem Gas strom, wobei das Verfahren die folgenden Schritte umfasst:
- Bereitstellen des Gasstroms an einen Strömungskanal (4);
- Bereitstellen eines Gases an einen Raum, der von dem Strömungskanal durch eine Membran getrennt ist, welche für die Gaskomponente selektiv ist; und
- Transferieren der Gaskomponente durch die Membran von dem Strömungskanal zu dem Gasraum, wobei der Schritt des Transferierens der Gaskomponente ein Erhöhen des Drucks in dem Gasraum umfasst, und wobei der Gasdruck von dem Gasraum für die Energieerzeugung verwendet wird,
wobei der Gasstrom einen relativ hohen Partialdruck von der Gaskomponente verglichen mit dem Gas in dem Raum aufweist.

9. System (2) zum Erzeugen von Energie und / oder zum Trennen einer Gaskomponente von einem Gasstrom, umfassend:
- einen Gaseinlass (24);
- eine Strömungskammer oder einen Strömungskanal (4) für den Gasstrom mit der Gaskomponente, welche / welcher konfiguriert ist zur Erzeugung von Kationen und Anionen aus der Gaskomponente, die in Wasser absorbiert wird und die mit Wasser reagiert;
- eine kationenselektive Elektrode (6) und eine anionenselektive Elektrode (8), konfiguriert zum Sorbieren von Kationen und Anionen, welche von dem Strömungskanal mittels einer lonenaustauschmembran (16, 18) getrennt werden,
- eine elektrische Schaltung (14), welche die Elektroden verbindet, um eine Elektro-Neutralität der Elektroden aufrecht zu erhalten; und
wobei das System konfiguriert ist zum Erzeugen elektrischer Energie und / oder zum Trennen der Gaskomponente von dem Gasstrom, wobei zumindest eine Elektrode von den zumindest zwei Elektroden von dem Strömungskanal durch eine Anionenaustauschmembran getrennt ist und zumindest eine andere Elektrode von den zumindest zwei Elektroden von dem Strömungskanal durch eine Kationenaustauschmembran getrennt ist.

10. System gemäß Anspruch 9, wobei:
- die Elektroden zumindest zwei kapazitive Elektroden umfassen, welche einen Stromkollektor und ein leitendes Material mit einer Kapazität umfassen; und
- der Strömungskanal operativ mit dem Gaseinlass zwischen zumindest zwei Elektroden verbunden ist.

11. System gemäß Anspruch 10, weiterhin eine feste Elektrolytstruktur umfassend, um einen Gasströmungswiderstand zu minimieren, wobei die Elektroden vorzugweise eine flache Platte umfassen und / oder wobei die Elektroden drahtgebundene Elektroden umfassen und / oder wobei die Elektroden fließfähige oder schwimmfähige Elektroden umfassen.

12. System gemäß einem oder mehreren der Ansprüche 10 oder 11, weiterhin einen Transfermechanismus umfassend, um Elektroden zu einem weiteren Strömungskanal zu transferieren, und / oder weiterhin umfassend einen Puffer, und / oder wobei das System einen umgekehrten Elektrodialysestapel umfasst.

13. Anlage, umfassend ein System gemäß einem oder mehreren der Ansprüche 9 - 12 zum Erzeugen von Energie mittels des Gasstroms und / oder zum Trennen von CO₂ von dem Gasstrom, wobei der Gasstrom ein Abgas ist.

## Revendications

1. Procédé de génération d'énergie à partir d'un écoulement gazeux comprenant un composant gazeux, tel que du CO₂, le procédé comprenant les étapes de :
- fourniture de l'écoulement gazeux à un canal d'écoulement (4) contenant de l'eau ;
- production (28) de cations et d'anions à partir du composant gazeux absorbé dans l'eau et qui réagit avec l'eau ;
- fourniture d'une électrode à sélectivité cationique (6) et d'une électrode à sélectivité anionique (8) capables de sorber des cations et des anions respectivement, dans lequel, pour fournir la sélectivité cationique et anionique, au moins une électrode des au moins deux électrodes est séparée du canal d'écoulement avec une membrane échangeuse d'anions (18) et au moins une autre électrode des au moins deux électrodes est séparée du canal d'écoulement avec une membrane échangeuse de cations (16) et/ou les électrodes sont modifiées chimiquement par remplissage des pores entre particules avec un gel polyélectrolyte ;
- diffusion des cations vers l'électrode à sélectivité cationique et des anions vers l'électrode à sélectivité anionique ;
- sorption (32) des cations et des anions par les électrodes (6, 8) ;
- transport d'électrons à travers un circuit électrique (14) pour maintenir l'électroneutralité des électrodes ; et
- génération d'énergie électrique.

2. Procédé selon la revendication 1, dans lequel le composant gazeux est du CO₂.

3. Procédé selon l'une quelconque des revendications précédentes, comprenant en outre la séparation du composant gazeux, tel que du CO₂, d'un écoulement gazeux, dans lequel la séparation du composant gazeux de l'écoulement gazeux comprend l'étape de désorption des cations et des anions des électrodes en fournissant un gaz accepteur au canal d'écoulement.

4. Procédé selon la revendication 3, dans lequel l'écoulement gazeux vers le canal d'écoulement a une concentration relativement élevée du composant gazeux par rapport au gaz accepteur.

5. Procédé selon la revendication 3 ou 4, dans lequel le gaz accepteur est de l'air extérieur.

6. Procédé selon la revendication 3, dans lequel les électrodes sont alimentées en énergie électrique pour forcer la désorption de CO₂ vers le gaz accepteur pour produire un gaz ayant un niveau en CO₂ élevé pendant la désorption.

7. Procédé selon la revendication 3, dans lequel l'énergie qui est générée lors de la désorption des ions vers le gaz accepteur est fournie à un second ensemble d'électrodes et un second canal d'écoulement pour forcer la désorption de CO₂ vers le second gaz accepteur pour une séparation du CO₂.

8. Procédé de génération d'énergie à partir d'un écoulement gazeux comprenant un composant gazeux, tel que du CO₂, et de séparation du composant gazeux, tel que du CO₂, d'un écoulement gazeux, le procédé comprenant les étapes de :
- fourniture de l'écoulement gazeux à un canal d'écoulement (4) ;
- fourniture d'un gaz à un compartiment qui est séparé du canal d'écoulement avec une membrane sélective pour le composant gazeux ; et
- transfert du composant gazeux à travers la membrane du canal d'écoulement vers le compartiment de gaz, dans lequel l'étape de transfert du composant gazeux comprend l'augmentation de la pression dans le compartiment de gaz, et dans lequel la pression de gaz du compartiment de gaz est utilisée pour la génération d'énergie,
dans lequel l'écoulement gazeux a une pression partielle relativement élevée du composant gazeux par rapport au gaz dans le compartiment.

9. Système (2) de génération d'énergie et/ou de séparation d'un composant gazeux d'un écoulement gazeux, comprenant :
- une entrée de gaz (24) ;
- une chambre d'écoulement ou un canal d'écoulement (4) pour l'écoulement gazeux avec le composant gazeux configuré pour la production de cations et d'anions à partir du composant gazeux qui est absorbé dans l'eau et qui réagit avec l'eau ;
- une électrode à sélectivité cationique (6) et une électrode à sélectivité anionique (8) configurées pour sorber des cations et des anions qui sont séparés du canal d'écoulement avec une membrane échangeuse d'ions (16, 18) ;
- un circuit électrique (14) connectant les électrodes pour maintenir une électroneutralité des électrodes ; et
dans lequel le système est configuré pour générer une énergie électrique et/ou séparer le composant gazeux de l'écoulement gazeux, dans lequel au moins une électrode des au moins deux électrodes est séparée du canal d'écoulement avec une membrane échangeuse d'anions et au moins une autre électrode des au moins deux électrodes est séparée du canal d'écoulement avec une membrane échangeuse de cations.

10. Système selon la revendication 9, dans lequel :
- les électrodes comprennent au moins deux électrodes capacitives comprenant un collecteur de courant et un matériau conducteur avec une capacité ; et
- le canal d'écoulement est connecté opérationnellement à l'entrée de gaz entre les au moins deux électrodes.

11. Système selon la revendication 10, comprenant en outre une structure électrolytique fixe pour minimiser la résistance de l'écoulement gazeux, dans lequel les électrodes comprennent de préférence une plaque plate et/ou dans lequel les électrodes comprennent des électrodes filaires et/ou les électrodes comprennent des électrodes fluides ou flottantes.

12. Système selon une ou plusieurs des revendications 10 ou 11, comprenant en outre un mécanisme de transfert pour transférer les électrodes vers un autre canal d'écoulement, et/ou comprenant en outre un tampon, et/ou dans lequel le système comprend une pile d'électrodialyse inversée.

13. Installation comprenant un système selon une ou plusieurs des revendications 9 à 12 de génération d'énergie avec l'écoulement gazeux et/ou de séparation de CO₂ de l'écoulement gazeux, dans lequel l'écoulement gazeux est un gaz de combustion.
